# EUROPEAN PATENT APPLICATION

(11) **EP 3 913 789 A1**
(43) Date of publication of application: **24.11.2021**
(21) Application number: 19909902.9
(22) Date of filing: 20.11.2019
(51) Int. Cl.: H02P 6/16

(54) **MOTOR CONTROL DEVICE**

(30) Priority: 18.01.2019 JP 2019006713
(71) Applicant: Panasonic Intellectual Property Management Co., Ltd., Osaka-shi, Osaka 540-6207 (JP)
(72) Inventor: MISHIMA, Masashi, Osaka-shi, Osaka 540-6207 (JP); IKEUCHI, Yoshiaki, Osaka-shi, Osaka 540-6207 (JP); IMADA, Yusuke, Osaka-shi, Osaka 540-6207 (JP)
(74) Representative: SSM Sandmair
(86) International application number: PCT/JP2019/045505
(87) International publication number: WO 2020/149002

(57) **Abstract**

A motor control device includes an instruction position detector that calculates, as an instruction position detection value, a position detection value at an external instruction timing. The instruction position detector includes an internal counter, a detection position calculator, and a correction value generator. The internal counter outputs a count value counted at a cyclic interval shorter than a position read cycle that is an interval at which a motor position detected by a rotary encoder mounted on a motor is read as a position detection value. The detection position calculator controls a rotation of the motor by use of the position detection value, is supplied with an external detection instruction signal including an instruction pulse, and calculates the instruction position detection value by use of a count value at the external instruction timing indicated by an edge of the instruction pulse. The correction value generator includes an external input terminal, an input circuit, a count value acquisition unit, and a correction value calculator.

## Description

### TECHNICAL FIELD

The present invention relates to a motor control device that detects a motor position by use of a rotary encoder and controls the rotation of a motor based on the detection result. The present invention particularly relates to a motor control device having a function of detecting a motor position at an input timing of an external input signal in a state where a motor is rotating at a constant speed.

### BACKGROUND ART

In a conventional motor control device, for rotation control, motor position information from a rotary encoder is acquired in a constant sampling cycle, for example, through serial communication. Furthermore, this motor control device is configured so that an external input signal can be supplied from the outside in order to detect the motor position at a timing indicated from the outside. That is, this motor control device is configured to acquire and store the motor position information at a timing when the external input signal is turned on.

Furthermore, in order to improve the detection accuracy of the motor position, a motor drive device including an internal counter inside the device has been proposed (see, for example, PTL 1). This motor drive device stores each of the value of the internal counter for each sampling cycle and the value of the internal counter at the timing of the external input signal. This motor drive device uses each of the stored values of the internal counter to estimate the motor position at the timing when the external input signal is turned on between adjacent samplings.

Furthermore, conventionally, a method for suppressing a decrease in detection accuracy due to an error caused by a transmission delay of the external input signal has been proposed (see, for example, PTL 2). For example, a proposal has been made to accurately estimate the motor position at the timing when the external input signal is input even in a case where a transmission delay time difference between the rise and fall of the external input signal is large and the motor operates at high speed. This motor drive device uses, as the external input signal, a rectangular wave with a clear duty ratio. This motor drive device first stores the value of the internal counter at each timing of the rise and fall of the input rectangular wave. Next, the motor drive device obtains a ratio between the timing from the rise to the fall and the timing from the fall to the rise by use of each of the stored values of the internal counter. The motor drive device estimates, from a difference between this ratio and the duty ratio of the rectangular wave, a relative delay correction amount of the transmission delay time.

However, in the conventional method described above, insulation processing is performed on the external input signal, for example, at a timing from the input of the external input signal to the acquisition of the value of the internal counter, and thus a delay is caused by an analog input circuit or the like that uses an analog element such as a photocoupler. Therefore, in the conventional method described above, the detected motor position includes an error due to the delay.

### Citation List

### Patent Literature

PTL 1: Unexamined Japanese Patent Publication No. 2008-220116
PTL 2: Unexamined Japanese Patent Publication No. 2015-2595

### SUMMARY OF THE INVENTION

The present invention has been made in view of the above-described problem, and an object of the present invention is to provide a motor control device capable of accurately detecting a motor position by correcting a delay in an analog input circuit or the like.

In order to achieve the above-described object, a motor control device of the present invention includes an instruction position detector that calculates, as an instruction position detection value, a position detection value at an external instruction timing. The instruction position detector includes an internal counter, a detection position calculator, and a correction value generator. The internal counter outputs a count value counted at a cyclic interval shorter than a position read cycle that is an interval at which a motor position detected by a rotary encoder mounted on a motor is read as a position detection value. The detection position calculator controls a rotation of the motor by use of the position detection value, is supplied with an external detection instruction signal including an instruction pulse, and calculates the instruction position detection value by use of a count value at the external instruction timing indicated by an edge of the instruction pulse. The correction value generator includes an external input terminal, an input circuit, a count value acquisition unit, and a correction value calculator. The external input terminal is supplied with the external detection instruction signal. The input circuit performs analog processing that causes a pulse delay on the external detection instruction signal to be input, and outputs a detection instruction signal including an acquisition pulse as the delayed instruction pulse. The count value acquisition unit acquires a count value of an internal counter signal at a data acquisition timing indicated by an edge of the acquisition pulse, and holds the count value of the internal counter signal as an acquisition count value. The correction value calculator calculates a correction value for correcting an error between the count value at the external instruction timing and the acquisition count value, the error being caused by the pulse delay. The correction value generator supplies, instead of the instruction pulse, a measurement pulse generated by use of the count value output from the internal counter to the input circuit to measure a pulse delay of the measurement pulse in a state where the motor is rotating at a constant speed, and calculates the correction value based on the pulse delay. The detection position calculator corrects the acquisition count value by use of the correction value to generate the count value at the external instruction timing.

According to such a configuration, the acquisition count value is corrected by use of the correction value generated based on the measurement in the correction value generator. Therefore, the influence of the delay in the input circuit can be suppressed. Therefore, the desired instruction position detection value at the external instruction timing can be accurately obtained.

The motor control device of the present invention can suppress the influence of the delay in the input circuit on the instruction position detection value by performing correction using the correction value generated by the correction value generator. Therefore, the present invention can provide a motor control device capable of accurately detecting the motor position.

### BRIEF DESCRIPTION OF DRAWINGS

FIG. 1 is a block diagram illustrating a configuration of a motor control device according to an exemplary embodiment of the present invention.
FIG. 2 is a timing chart illustrating a timing example centered on an external detection instruction signal PEx of the motor control device.
FIG. 3 is a block diagram illustrating a more detailed configuration example of an instruction position detector of the motor control device.
FIG. 4 is a timing chart illustrating a timing example for calculating a correction value Crr of the motor control device.
FIG. 5 is a timing chart illustrating a timing example for detecting a motor position at an external instruction timing of the motor control device.

### DESCRIPTION OF EMBODIMENT

Hereinafter, an exemplary embodiment of the present invention will be described with reference to the drawings. Note that the exemplary embodiment described below shows a preferred specific example of the present disclosure. Therefore, the numerical values, shapes, materials, components, arrangement positions and connection forms of the components, and the like shown in the following exemplary embodiment are examples, and are not intended to limit the present disclosure. Therefore, among the components in the following exemplary embodiment, components not described in the independent claim indicating the highest level concept of the present disclosure will be described as optional components.

The drawings are schematic diagrams and are not necessarily exactly illustrated. Therefore, the scales and the like do not always match in the drawings. In the drawings, substantially the same components are designated by the same reference marks, and duplicate description will be omitted or simplified.

### (Exemplary embodiment)

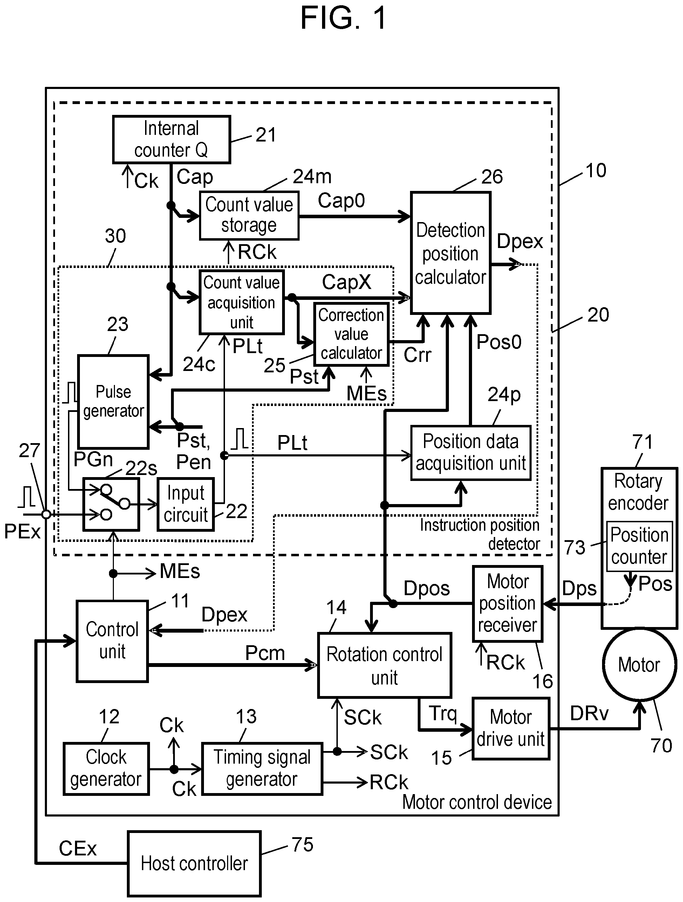

FIG. 1 is a block diagram illustrating a configuration of motor control device 10 according to an exemplary embodiment of the present invention. FIG. 1 illustrates a configuration example of a motor control system including motor control device 10 of the present exemplary embodiment. This motor control system is a system mainly used for industrial purposes. This motor control system is a system in which, for example, motor control device 10 called servo amplifier controls and drives motor 70 such as a servo motor to operate a load connected to motor 70.

As illustrated in FIG. 1, in this motor control system, host controller 75, motor 70, and rotary encoder 71 are connected to motor control device 10.

Host controller 75 performs processing such as supplying command information to motor control device 10, for example, and controls the entire system via motor control device 10. Host controller 75 is a controller for such servo control, and for example, a microcontroller is suitable. Motor 70 is energized and driven by motor control device 10 while being controlled to rotate according to, for example, the command information. Furthermore, in order to detect a motor position, that is, to detect a rotation position of a rotor of motor 70, rotary encoder 71 is mounted on motor 70.

With such a configuration of the motor control system, motor control device 10 is notified of a command regarding the rotation position, rotation speed, and the like from host controller 75 arranged outside motor control device 10, for example. While receiving position information from rotary encoder 71, motor control device 10 drives motor 70 so that the rotor reaches a predetermined position and speed according to the command from host controller 75.

In the present exemplary embodiment, as illustrated in FIG. 1, host controller 75 supplies, to motor control device 10, an external command signal CEx including a position command. Furthermore, rotary encoder 71 supplies, to motor control device 10, a position sensor signal Dps including the detected position information. Motor control device 10 supplies, to motor 70, a drive voltage DRv for driving motor 70. In the present exemplary embodiment, the configuration example of such a motor control system will be described.

Motor 70 driven by motor control device 10 is preferably a brushless motor including a stator with three-phase windings of U-phase, V-phase, and W-phase and a rotor facing the stator and rotatably arranged around a rotation shaft. The rotor of motor 70 rotates when the windings of the stator are energized and driven by the drive voltage DRv from motor control device 10. By the rotation of the rotor, motor 70 is rotationally driven so as to rotate the load via the rotation shaft.

In order to control the rotation of motor 70, rotary encoder (hereinafter, simply referred to as encoder as appropriate) 71 that detects the rotation position (hereinafter, also referred to as motor position as appropriate) of the rotor is mounted on motor 70. Encoder 71 that functions as such a position sensor outputs the position sensor signal Dps indicating the detected rotation position, and the position sensor signal Dps is supplied to motor control device 10.

In particular, in the present exemplary embodiment, an incremental rotary encoder is adopted as encoder 71. The incremental encoder includes a grid disk in which a plurality of slits is uniformly formed in a circumferential direction, a photoelectric element for measuring the number of passages of the slits, and position counter 73 for counting the number of passages. The grid disk is mounted on the rotation shaft of motor 70. As a result, the passing of the slits according to rotation is detected by use of the photoelectric element, and the number of passing slits is counted by position counter 73. A count value indicating this count number corresponds to a rotation angle. Incremental encoder 71 is a motor position detector that measures, based on such a configuration, the rotation angle, that is, the rotation position of the rotor. As described above, in FIG. 1, the count value with a position counter signal Pos output from position counter 73 indicates a position detection value corresponding to the rotation position of motor 70 detected by encoder 71. This count value is supplied as the position sensor signal Dps to motor control device 10.

Next, as illustrated in FIG. 1, motor control device 10 includes, in addition to control unit 11, clock generator 12, timing signal generator 13, rotation control unit 14, motor drive unit 15, and motor position receiver 16, instruction position detector 20 that detects a position of the rotor at a timing indicated from the outside.

The external command signal CEx from host controller 75 to motor control device 10 as described above is supplied to control unit 11. Control unit 11 includes, for example, a central processing unit (CPU) or a processor. Control unit 11 performs various types of processing and control in motor control device 10 based on a program stored in a memory. As an example of the processing, control unit 11 extracts control commands, which are various commands for controlling motor 70, from the supplied external command signal CEx. FIG. 1 illustrates an example in which a position command signal Pcm that commands the position of the rotor is extracted from the control commands and supplied to rotation control unit 14.

Furthermore, in the present exemplary embodiment, each operation is executed mainly by digital processing in motor control device 10. Therefore, motor control device 10 includes clock generator 12 that generates a clock signal, as is well known, for the digital processing. That is, clock generator 12 generates a clock Ck, which is a cyclic pulse signal, in motor control device 10. The clock Ck is used as a reference of an operation cycle of the digital processing in motor control device 10, for example, for digital processing such as latching data.

Motor control device 10 further includes timing signal generator 13 that generates various timing signals based on the clock Ck. Specifically, timing signal generator 13 generates pulse signals indicating various timings by, for example, dividing the clock Ck. FIG. 1 illustrates an example in which timing signal generator 13 generates a control clock signal (hereinafter, appropriately referred to as control clock) SCk of a cyclic pulse signal indicating a control cycle in motor control device 10, and a position read clock signal (hereinafter, appropriately referred to as read clock) RCk of a cyclic pulse signal indicating a position read cycle of the position sensor signal Dps from encoder 71.

Note that, in the present exemplary embodiment, unless otherwise specified, each digital processing circuit will be described with an example of operating at a rising edge where the level of a pulse signal such as the clock Ck, the control clock SCk, or the read clock RCk changes from Low to High. That is, in the present exemplary embodiment, a configuration example, the details of which will be further described below, is given in which a D-type flip-flop is used as a latch for temporarily storing data. As is well known, this D-type flip-flop holds the value of a D input as a Q output at a rising edge of a pulse signal supplied to a clock terminal.

Next, a configuration in which motor 70 is controlled, energized, and driven by motor control device 10 will be described. In the present exemplary embodiment, basically, motor control device 10 executes feedback control using the position information with the position sensor signal Dps from encoder 71. By this feedback control, the movement of the rotor in motor 70 is controlled so that the rotation position of motor 70 follows the position command signal Pcm from control unit 11.

Motor control device 10 includes motor position receiver 16 in order to acquire the position information from the position sensor signal Dps. Motor position receiver 16 and encoder 71 are communicated and connected by, for example, serial communication. The count value of the position counter signal Pos by position counter 73 of encoder 71 is transmitted, as the position sensor signal Dps in a predetermined transmission format, to motor position receiver 16. Furthermore, the read clock RCk is supplied to motor position receiver 16. Motor position receiver 16 restores the position information from the position sensor signal Dps in the cycle of the read clock RCk. The data, which is the restored position information, is then used as the position detection value, and is sequentially output as a position detection value signal Dpos in the cycle of the read clock RCk. That is, the position detection value signal Dpos is a digital signal in which position count values of the position counter signal Pos by encoder 71 are arranged as position detection values in time series in the sampling cycle of the read clock RCk. As described above, motor control device 10 reads, as the position detection value with the position detection value signal Dpos, the position count value indicating the motor position detected by encoder 71 for each read clock RCk, which is an interval of the position read cycle. The position detection value signal Dpos is output from motor position receiver 16. The position detection value signal Dpos is supplied to rotation control unit 14, and rotation control unit 14 controls the rotation of motor 70 using the position detection value of the position detection value signal Dpos. Furthermore, the position detection value signal Dpos is also supplied to instruction position detector 20 that calculates an instruction position detection value at the timing indicated from the outside.

Rotation control unit 14 receives the position detection value signal Dpos and the position command signal Pcm supplied from control unit 11, and generates a drive signal Trq for driving motor 70 by arithmetic processing based on these signals. Furthermore, rotation control unit 14 is supplied with the control clock SCk. Rotation control unit 14 executes processing such as this arithmetic processing in the cycle of the control clock SCk. In order to execute the position feedback control, rotation control unit 14 executes, for example, the following arithmetic processing. That is, rotation control unit 14 sequentially calculates a position deviation, which is a difference between the position command signal Pcm and the position detection value signal Dpos. Rotation control unit 14 generates the drive signal Trq by proportional integral differential (PID) arithmetic processing or the like on the position deviation. Note that, in the present exemplary embodiment, an example in which motor control device 10 mainly controls the rotation position will be described. However, rotation control unit 14 may be configured so that, for example, the speed is calculated from position data and the drive signal Trq is generated by speed feedback control.

The drive signal Trq is supplied to motor drive unit 15. Motor drive unit 15 generates and outputs the drive voltage DRv that energizes and drives the windings of motor 70 based on the drive signal Trq. That is, motor drive unit 15 includes a pulse width modulation (PWM) circuit for generating a drive waveform, a so-called inverter, and the like, and uses these circuits to generate the drive voltage DRv according to the supplied drive signal Trq. When the drive voltage DRv is applied to the windings of motor 70, motor 70 is energized and driven. When motor 70 is energized and driven, the rotor in motor 70 rotates according to the position command signal Pcm.

As described above, in the present exemplary embodiment, encoder 71 notifies rotation control unit 14 of the position detection value signal Dpos indicating the actual rotation position of the rotor via motor position receiver 16. At the same time, control unit 11 notifies rotation control unit 14 of the position command signal Pcm, which is a command to control the rotation position. Then, rotation control unit 14 configures a position control loop that performs the feedback control so that the rotation position of the rotor follows a command position based on the position detection value signal Dpos and the position command signal Pcm. Motor control device 10 continuously executes the above-described series of loop processing to control the rotation of motor 70.

Furthermore, in the present exemplary embodiment, motor control device 10 includes instruction position detector 20, and instruction position detector 20 enables the detection of the position of the rotor at the timing indicated from the outside. In the present exemplary embodiment, in order to indicate the timing of such motor position detection, a pulse signal as an external detection instruction signal PEx is supplied from the outside. In the present exemplary embodiment, the pulse in the external detection instruction signal PEx is used as an instruction pulse, and more specifically, an example is given in which a rising timing of an edge of the instruction pulse is set as an external instruction timing, which is an instruction timing from the outside.

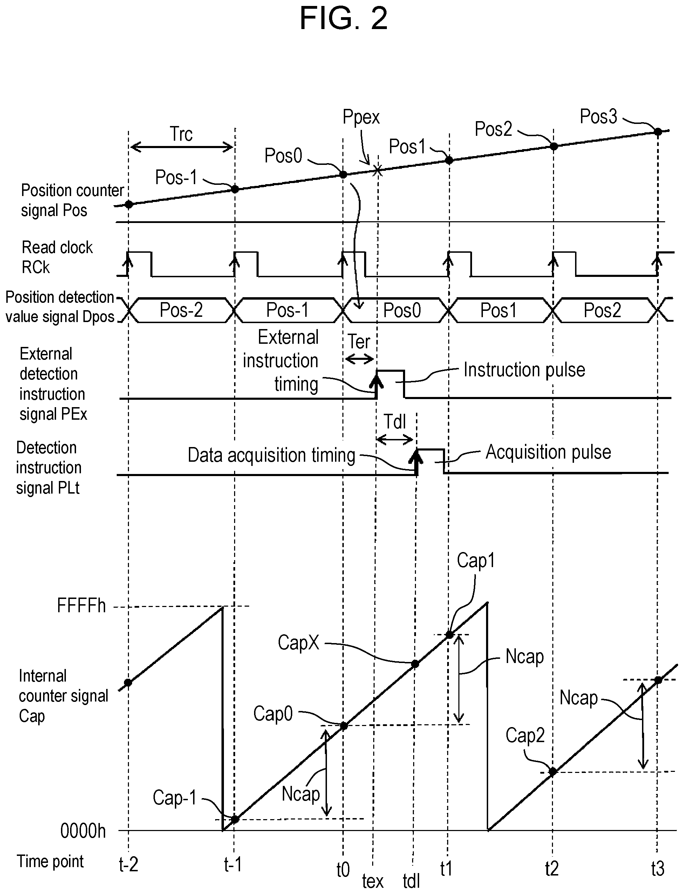

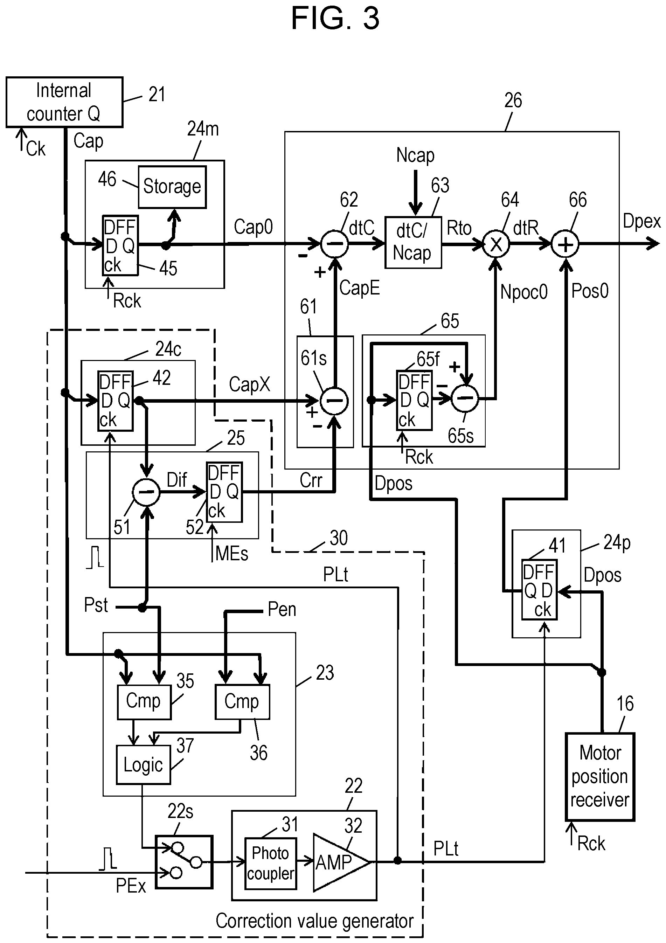

In order to detect a rotor position corresponding to such an instruction, instruction position detector 20 includes, as illustrated in FIG. 1, internal counter 21, input circuit 22, changeover switch 22s, pulse generator 23, count value storage 24m, count value acquisition unit 24c, position data acquisition unit 24p, correction value calculator 25, and detection position calculator 26. Furthermore, FIG. 2 is a timing chart illustrating a timing example centered on the external detection instruction signal PEx of motor control device 10 according to the exemplary embodiment of the present invention. FIG. 2 illustrates, as well as the position counter signal Pos and the position detection value signal Dpos of position counter 73, the state of an internal counter signal Cap from internal counter 21, which will be described in detail below, and the like. Furthermore, FIG. 3 is a block diagram illustrating a more detailed configuration example of instruction position detector 20 of motor control device 10 according to the exemplary embodiment of the present invention. Next, the configuration and operation of instruction position detector 20 will be described in detail.

First, as illustrated in FIG. 2, the external instruction timing with the external detection instruction signal PEx and the position detection value signal Dpos indicating the position of the rotor are asynchronous, and there is no temporal relationship between the external instruction timing and the position detection value signal Dpos. As described above, the position detection value signal Dpos is a digital signal, and is configured so that the position counter signal Pos of position counter 73 is sampled in a position read cycle (hereinafter, appropriately referred to as read cycle) Trc, and pieces of data discretized by the sampling are arranged in time-series order. That is, as illustrated in FIG. 2, the position detection value signal Dpos is configured so that position detection values Pos-1, Pos0, Pos1, Pos2, and the like sampled at time points t-1, t0, t1, t2, and the like set at intervals of the read cycle Trc are arranged in time series. Here, in the present exemplary embodiment, the read cycle Trc is set as the cycle of the read clock RCk.

Furthermore, the rotation of the rotor is controlled at a constant rotation speed, and thus, in the position counter signal Pos, the movement amount of the rotor in the cycle of the read clock RCk is constant.

In contrast with the position detection value signal Dpos as described above, the external instruction timing is an arbitrary timing that is not related to a sampling timing in encoder 71. Thus, there is an irregular time lag between the external instruction timing and a read timing in the cycle of the read clock RCk. FIG. 2 illustrates a state where the position detection value signal Dpos is a position detection value PosO at a time point tex of the external instruction timing. As described above, in the case of FIG. 2, there is a lag time Ter, which is a time lag, between the time point tex, which is the external instruction timing, and the time point t0, which is the reading timing of the position detection value PosO. Furthermore, due to the lag time Ter, an error also occurs between a value Ppex that accurately indicates the position at the external instruction timing and the position detection value PosO with the position detection value signal Dpos. In the case of FIG. 2, the value of this error is Ppex ― Pos0.

Therefore, as illustrated in FIG. 1, instruction position detector 20 is provided with a counter as internal counter 21. By interpolation (interpolation method) using a count value of the internal counter signal Cap of internal counter 21, the value indicating the position at the external instruction timing generated between adjacent sampling timings is calculated as an instruction position detection value Dpex.

Furthermore, in the present exemplary embodiment, as illustrated in FIG. 1, input circuit 22 is provided. Input circuit 22 is an analog circuit that performs analog signal processing on the external detection instruction signal PEx from the outside. More specifically, as illustrated in FIG. 3, a configuration example is given in which input circuit 22 includes photocoupler 31 and amplifier 32, which are analog elements. Here, photocoupler 31 is provided to insulate an external signal such as the external detection instruction signal PEx for safety. Amplifier 32 is provided to keep the pulse level of the external detection instruction signal PEx constant. Meanwhile, since input circuit 22 is provided for the external detection instruction signal PEx, a microsecond-order delay occurs, which is a non-negligible level as compared with a nanosecond-order delay in wiring on a normal electrically-connected circuit board. Therefore, input circuit 22 delays the external detection instruction signal PEx by a time Tdl, as illustrated in FIG. 2. As a result, input circuit 22 outputs a detection instruction signal PLt, which is an external instruction timing delayed from the external detection instruction signal PEx. That is, input circuit 22 performs analog processing including a pulse delay. Therefore, in other words, input circuit 22 outputs the detection instruction signal PLt including a pulse as the delayed instruction pulse of the external detection instruction signal PEx. In the present exemplary embodiment, the pulse in the detection instruction signal PLt will be described as an acquisition pulse. FIG. 2 gives an example in which the acquisition pulse of the detection instruction signal PLt is output at a time point tdl delayed by the time Tdl from the time point tex of the external instruction timing.

Therefore, in the present exemplary embodiment, instruction position detector 20 further has a correction function of measuring, by use of the count value of internal counter 21, the delay amount of the pulse signal generated by input circuit 22 and correcting, by use of the measured delay amount, the error due to the delay.

Internal counter 21 provided in instruction position detector 20 in order to take these measures is a counter that counts the number, similarly to position counter 73 of encoder 71. Internal counter 21 is configured to output count values counted at cyclic intervals shorter than the cycles of the read clock RCk. In the present exemplary embodiment, as illustrated in FIG. 1, internal counter 21 is supplied with the clock Ck, and counts up each time the clock Ck rises to count the number of clocks. The internal counter signal Cap based on the count is output from a Q output of internal counter 21. The internal counter signal Cap is a digital signal in which count values that sequentially count up for each cycle of the clock Ck are arranged in time series. More specifically, internal counter 21 is, for example, a 16-bit wide free-run counter. The internal counter signal Cap counts up from 0000h to FFFFh (the last "h" in ".... h" indicates that the count value is a hexadecimal number) in the cycle of the clock Ck, as illustrated in FIG. 2, and, when the internal counter signal Cap exceeds FFFFh, the internal counter signal Cap returns to 0000h and counts up again. As illustrated in FIG. 1, the internal counter signal Cap as described above is supplied to count value storage 24m, count value acquisition unit 24c, and pulse generator 23.

As illustrated in FIG. 1, in addition to the internal counter signal Cap, the read clock RCk is supplied to count value storage 24m. Count value storage 24m acquires the count values of the internal counter signal Cap at intervals of the position read cycle, which is the cycle of the read clock RCk, and sequentially stores the count values. FIG. 3 illustrates, as a configuration of count value storage 24m that operates in this way, an example in which D-type flip-flop (hereinafter, appropriately referred to as DFF) 45 and storage 46 are provided. The internal counter signal Cap is supplied to a D input of DFF 45, and the read clock RCk is supplied to a clock terminal ck. Furthermore, a Q output of DFF 45 is connected to storage 46, which is a memory, and is output to detection position calculator 26. With count value storage 24m having such a configuration, DFF 45 acquires the value of the internal counter signal Cap in the cycle of the read clock RCk, and storage 46 sequentially stores a predetermined number of the acquired values. That is, for the internal counter signal Cap as illustrated in FIG. 2, DFF 45 acquires count values Cap-1, Cap0, Cap1, Cap2, and the like of the internal counter signal Cap at the time points t-1, t0, t1, t2, and the like set at intervals of the read cycle Trc. The acquired count values Cap-1, Cap0, Cap1, Cap2, and the like are then stored in count value storage 24m, and are sequentially output in the form of digital signals as internal count value signals Dcap.

Note that, in the case of the present exemplary embodiment, the read clock RCk is generated by the clock Ck being divided by timing signal generator 13, and internal counter 21 counts the clock Ck to generate the internal counter signal Cap. Therefore, for example, in a case where the clock Ck is divided by 1000 to generate the read clock RCk, DFF 45 acquires count values that change by 1000 from the internal counter signal Cap. Hereinafter, the amount by which the count value changes for each read clock RCk will be described as a change value Ncap of the internal counter as illustrated in FIG. 2. For example, in a case where the clock Ck is divided by 1000 to generate the read clock RCk, the count value increases by the change value Ncap = 1000 from CapO to Cap 1 in FIG. 2. For Cap1 to Cap2, the count value first increases from Cap1 to FFFFh, then returns to 0000h, and increases from 0000h to Cap2 so that the count value changes by the total change value Ncap = 1000. Note that FIGS. 1 and 3 illustrate a case where count value storage 24m acquires the count value CapO from the internal counter signal Cap and outputs the count value CapO to detection position calculator 26.

As illustrated in FIG. 1, in addition to the internal counter signal Cap, the detection instruction signal PLt output from input circuit 22 is supplied to count value acquisition unit 24c. Count value acquisition unit 24c acquires the value of the internal counter signal Cap at a timing of a pulse rise of the detection instruction signal PLt and temporarily holds the value. FIG. 3 illustrates, as a configuration of count value acquisition unit 24c that operates in this way, an example in which DFF 42 is provided. The internal counter signal Cap is supplied to a D input of DFF 42, and the detection instruction signal PLt is supplied to a clock terminal ck. With count value acquisition unit 24c having such a configuration, as illustrated in FIG. 2, DFF 42 acquires the value of the internal counter signal Cap as an acquisition count value CapX at a rising timing of an edge of the acquisition pulse of the detection instruction signal PLt, that is, at the time point tdl, and temporarily holds the value.

Note that, as described above, the detection instruction signal PLt is a signal as the delayed external detection instruction signal PEx. In response to the external instruction timing by the external detection instruction signal PEx, the data is actually acquired by the detection instruction signal PLt. As a result, regarding the detection instruction signal PLt, the rising timing of the acquisition pulse, that is, the time point tdl in FIG. 2 will be described as a data acquisition timing, as illustrated in FIG. 2. Count value acquisition unit 24c acquires the count value of the internal counter signal Cap at the data acquisition timing indicated by the edge of the acquisition pulse, and holds the count value as the acquisition count value. Furthermore, in FIGS. 1 and 3, count value acquisition unit 24c acquires the acquisition count value CapX from the internal counter signal Cap, and the acquisition count value CapX is output to detection position calculator 26 and correction value calculator 25.

As described above, count value acquisition unit 24c acquires the value of the internal counter signal Cap at the data acquisition timing delayed by input circuit 22. Therefore, in the present exemplary embodiment, as described above, instruction position detector 20 has the correction function of correcting the delay caused by input circuit 22. In order to implement this correction function, instruction position detector 20 further includes pulse generator 23, changeover switch 22s, and correction value calculator 25. As illustrated in FIG. 3, pulse generator 23, changeover switch 22s, input circuit 22, count value acquisition unit 24c, and correction value calculator 25 constitute correction value generator 30. With this configuration, correction value generator 30 generates a correction value Crr for correcting an error included in the acquisition count value CapX due to the pulse delay in input circuit 22.

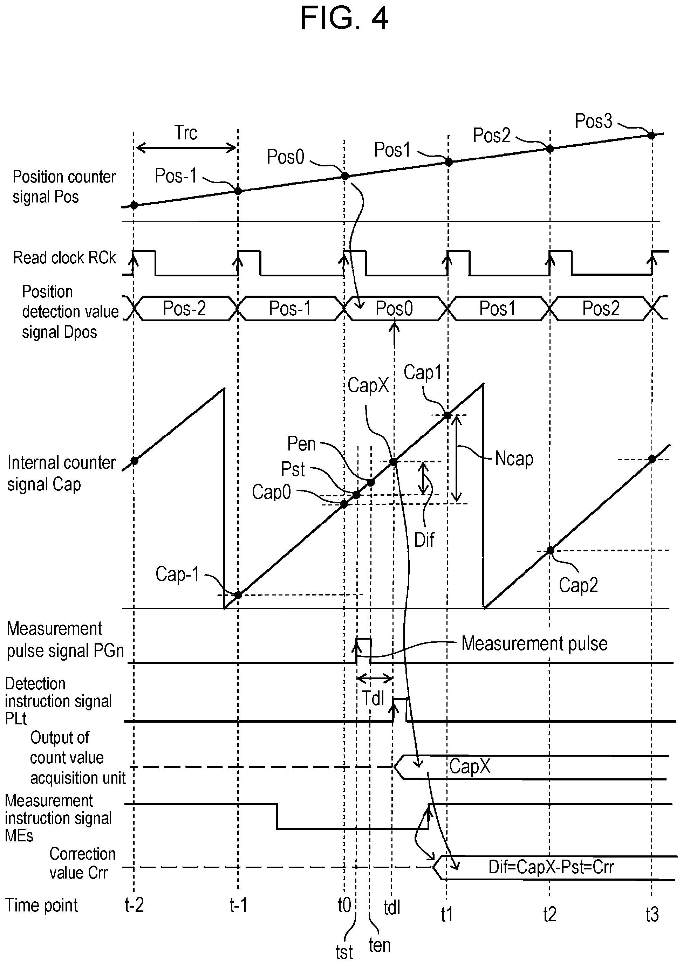

FIG. 4 is a timing chart illustrating a timing example for calculating the correction value Crr of motor control device 10 according to the exemplary embodiment of the present invention. FIG. 4 illustrates the state of each part around the time point t0 similar to that in FIG. 2. Next, the configuration and operation for calculating the correction value Crr will be described with reference to FIGS. 1, 3, and 4.

First, as illustrated in FIG. 1, pulse generator 23 is supplied with a start value Pst and a stop value Pen, which are predetermined values, in addition to the internal counter signal Cap. Each of the start value Pst and the stop value Pen is a value for indicating a timing of a pulse to be generated. The start value Pst corresponds to a start timing of the pulse, and the stop value Pen corresponds to an end timing of the pulse. Note that the start value Pst and the stop value Pen may be supplied from control unit 11. Pulse generator 23 generates a measurement pulse of a measurement pulse signal PGn based on the count value of the internal counter signal Cap, the start value Pst, and the stop value Pen. FIG. 4 illustrates the measurement pulse signal PGn having the measurement pulse whose pulse level becomes High between the time point t0 and the time point t1.

FIG. 3 illustrates, as a configuration of pulse generator 23 that generates the measurement pulse signal PGn, an example in which comparator 35, comparator 36, and logic circuit 37 are provided. Comparator 35 is supplied with the start value Pst, which is a value for indicating a start of pulse output, together with the internal counter signal Cap. Comparator 35 compares a magnitude relationship between the count value of the internal counter signal Cap and the start value Pst, and outputs a signal indicating the start to logic circuit 37 when the count value of the internal counter signal Cap exceeds the start value Pst, as illustrated in FIG. 4. On the other hand, comparator 36 is supplied with the stop value Pen, which is a value for indicating an end of the pulse output, together with the internal counter signal Cap. Comparator 36 compares a magnitude relationship between the count value of the internal counter signal Cap and the stop value Pen, and outputs a signal indicating the stop to logic circuit 37 when the count value of the internal counter signal Cap exceeds the stop value Pen, as illustrated in FIG. 4. As illustrated in FIG. 4, with the signals from comparator 35 and comparator 36, logic circuit 37 outputs the measurement pulse that rises to High at a time point tst based on the start value Pst and falls to Low at a time point ten based on the stop value Pen in the measurement pulse signal PGn. The measurement pulse signal PGn output from pulse generator 23 is supplied to changeover switch 22s. Note that, since the measurement pulse is generated in this way, the stop value Pen is larger than the start value Pst. In addition, a pulse width of the measurement pulse can be set by a difference between the start value Pst and the stop value Pen.

As illustrated in FIG. 1, changeover switch 22s is supplied with the measurement pulse signal PGn from pulse generator 23, the external detection instruction signal PEx from external input terminal 27, and a measurement instruction signal MEs from control unit 11. Changeover switch 22s is a switch that selects and outputs either the measurement pulse signal PGn or the external detection instruction signal PEx in response to an instruction of the measurement instruction signal MEs. In the present exemplary embodiment, an example is given in which the measurement pulse signal PGn is used in a case where the level of the measurement instruction signal MEs is Low. That is, as illustrated in FIG. 4, the measurement pulse signal PGn generated by pulse generator 23 is supplied to input circuit 22 via changeover switch 22s during a period when the measurement instruction signal MEs is Low. Input circuit 22 then outputs the detection instruction signal PLt, which is a signal as the delayed measurement pulse signal PGn, after the time Tdl has elapsed.

As illustrated in FIG. 1, the detection instruction signal PLt as the delayed measurement pulse signal PGn is supplied to count value acquisition unit 24c. DFF 42 of count value acquisition unit 24c acquires the acquisition count value CapX from the internal counter signal Cap at the data acquisition timing at the time point tdl, and temporarily holds the acquisition count value CapX.

As illustrated in FIG. 1, the acquisition count value CapX temporarily held in count value acquisition unit 24c by such an operation is supplied to correction value calculator 25. Correction value calculator 25 is supplied with the start value Pst in advance. Correction value calculator 25 calculates the delay amount in input circuit 22 from the supplied start value Pst and acquisition count value CapX.

Note that, in FIG. 1, a switch of changeover switch 22s may change over to external input terminal 27, the external detection instruction signal PEx may be input by use of a pulse generator for waveform signal generation or the like when the level of the measurement instruction signal MEs is Low, and the external detection instruction signal PEx may be used as the measurement pulse signal to calculate the delay amount in input circuit 22, as illustrated in FIG. 2.

FIG. 3 illustrates, as a configuration of correction value calculator 25 that operates in this way, an example in which subtractor 51 and DFF 52 are provided. Subtractor 51 is supplied with the start value Pst and the acquisition count value CapX, and calculates a difference value Dif, which is a difference between the start value Pst and the acquisition count value CapX. Here, as illustrated in FIG. 4, since the start value Pst corresponds to the time point tst and the acquisition count value CapX corresponds to the time point tdl, the difference value Dif corresponds to the delay time Tdl in input circuit 22. In other words, by using the difference value Dif corresponding to the time Tdl, it is possible to back-calculate the external instruction timing of the external detection instruction signal PEx, which is a timing earlier than the time point tdl illustrated in FIG. 2 by the time Tdl, for example. In the present exemplary embodiment, estimating the external instruction timing by this back calculation corrects the delay in input circuit 22. As illustrated in FIG. 3, the difference value Dif as described above in subtractor 51 is supplied to a D input of DFF 52. Furthermore, the measurement instruction signal MEs is supplied to a clock terminal ck of DFF 52. With correction value calculator 25 having such a configuration, as illustrated in FIG. 4, DFF 52 acquires, as the correction value Crr, the difference value Dif from subtractor 51 at a timing of a pulse rise of the measurement instruction signal MEs, and temporarily holds the correction value Crr.

As described above, correction value generator 30 generates the measurement pulse by using the internal counter signal Cap. Correction value generator 30 supplies the measurement pulse to input circuit 22, measures the pulse delay of the measurement pulse, and calculates the correction value Crr based on the pulse delay of the measured measurement pulse. Note that the correction value Crr may be constantly stored, for example, in control unit 11 by use of a non-volatile memory or the like and used for each position detection instruction from the outside.

As described above, the correction value Crr calculated based on the measurement by the configuration of correction value generator 30 as illustrated in FIG. 3 is used in the detection of the position of the rotor at the external instruction timing by the external detection instruction signal PEx, to correct the delay in input circuit 22.

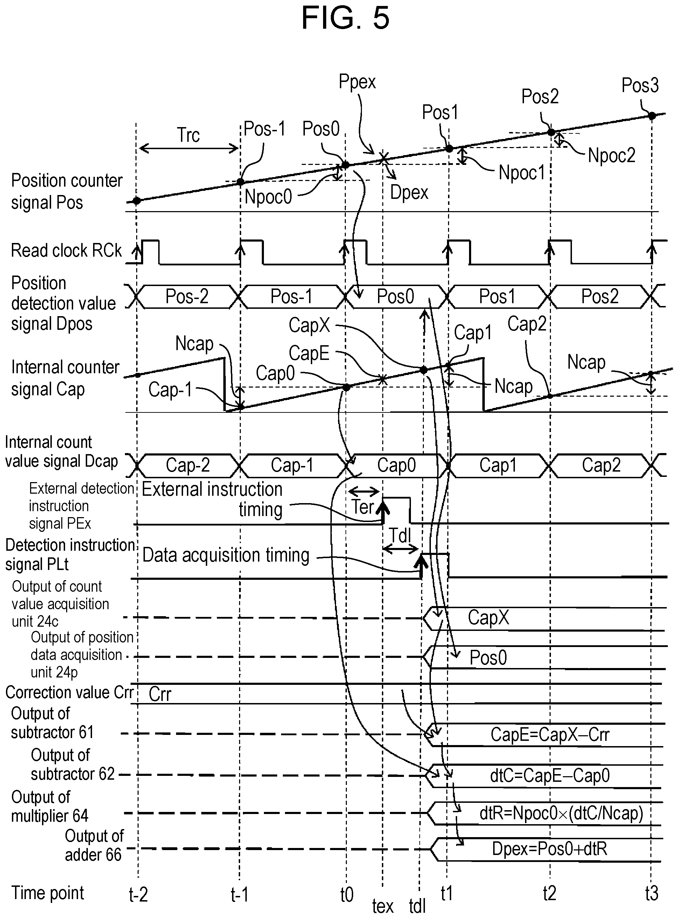

FIG. 5 is a timing chart illustrating a timing example for detecting the motor position at the external instruction timing of motor control device 10 according to the exemplary embodiment of the present invention. FIG. 5 illustrates the state of each part around the time point t0 similar to that in FIG. 2. Next, the configuration and operation of instruction position detector 20 that detects the motor position at the external instruction timing will be described with reference to FIGS. 1, 3 and 5. In order to execute such position detection, instruction position detector 20 further includes position data acquisition unit 24p and detection position calculator 26, as illustrated in FIG. 1, in addition to the above-described configuration. Furthermore, in order to perform the position detection by an external instruction, changeover switch 22s is set so as to select the external detection instruction signal PEx according to an instruction from control unit 11.

Position data acquisition unit 24p is supplied with the position detection value signal Dpos from motor position receiver 16 and the detection instruction signal PLt from input circuit 22. Position data acquisition unit 24p acquires the position detection value from the position detection value signal Dpos at the data acquisition timing by the detection instruction signal PLt and temporarily holds the position detection value. FIG. 3 illustrates, as a configuration of position data acquisition unit 24p that operates in this way, an example in which DFF 41 is provided. The position detection value signal Dpos is supplied to a D input of DFF 41, and the detection instruction signal PLt is supplied to a clock terminal ck. With position data acquisition unit 24p having such a configuration, as illustrated in FIG. 5, DFF 41 acquires the value of the position detection value signal Dpos at the rising timing of the acquisition pulse of the detection instruction signal PLt, that is, the time point tdl, which is the data acquisition timing, and temporarily holds the value. FIGS. 1, 3, and 5 illustrate a case where the position detection value PosO is acquired from the position detection value signal Dpos in position data acquisition unit 24p.

Furthermore, detection position calculator 26 is supplied with the internal count value signal Dcap from count value storage 24m, the count value acquired by count value acquisition unit 24c, the correction value Crr calculated by correction value calculator 25, the position detection value signal Dpos from motor position receiver 16, and the position detection value acquired by position data acquisition unit 24p. That is, in a period from the time point t0 to the time point t1,when the data acquisition timing by the detection instruction signal PLt as illustrated in FIG. 5 is generated, as illustrated in FIGS. 1 and 3, detection position calculator 26 is supplied with the count value CapO from count value storage 24m, the acquisition count value CapX from count value acquisition unit 24c, the correction value Crr from correction value calculator 25, the position detection value signal Dpos from motor position receiver 16, and the position detection value PosO from position data acquisition unit 24p.

Detection position calculator 26 calculates the instruction position detection value Dpex at the external instruction timing at the time point tex by using these values in the period from the time point t0 to the time point t1. That is, detection position calculator 26 calculates the instruction position detection value Dpex by interpolation using the count value CapO of the count values acquired at intervals of the read cycle Trc and a count value CapE at the external instruction timing. Furthermore, regarding this count value CapE, as described above, the acquisition count value CapX is corrected by use of the correction value Crr, so that the count value CapE at this external instruction timing is generated.

Note that the instruction position detection value Dpex is an estimated value calculated by the back calculation for the value Ppex indicating the accurate position at the external instruction timing described in FIG. 2. That is, the instruction position detection value Dpex corresponds to this value Ppex, and in a case where there is no error or the like, the instruction position detection value Dpex is equal to the value Ppex. Hereinafter, the configuration and operation of detection position calculator 26 will be described by use of these values in the period from the time point t0 to the time point t1.

In FIG. 3, as the configuration of detection position calculator 26 that calculates the instruction position detection value Dpex as described above, delay correction unit 61, subtractor 62, divider 63, multiplier 64, position change amount calculator 65, and adder 66 are provided.

Delay correction unit 61 illustrated in FIG. 3 includes subtractor 61s. Subtractor 61s subtracts the correction value Crr held by correction value calculator 25 from the acquisition count value CapX held by count value acquisition unit 24c, and outputs the subtraction result as the corrected count value CapE. Here, since the correction value Crr corresponds to the delay time Tdl in input circuit 22, the corrected count value CapE corresponds to the value of the internal counter signal Cap at the external instruction timing, which is earlier than the data acquisition timing at the time point tdl by the time Tdl, as illustrated in FIG. 5. As described above, in the present exemplary embodiment, the correction value Crr calculated by the measurement with correction value generator 30 is used, and delay correction unit 61 corrects the delay in input circuit 22.

The corrected count value CapE and the count value CapO output from count value storage 24m are supplied to subtractor 62. Subtractor 62 subtracts the count value CapO from the corrected count value CapE and outputs the subtraction result as a difference value dtC.

Here, a time from the time point t0 at which the internal counter signal Cap is the count value CapO to the time point tex at the external instruction timing is set as the time Ter as illustrated in FIG. 5. Thus, the difference value dtC is a change value of the value of the internal counter signal Cap in the time Ter as illustrated in FIG. 5. In addition, the read cycle Trc and the change value Ncap of the internal counter in this read cycle Trc are known. Therefore, for example, a ratio Rto between the read cycle Trc and the time Tdl is (dtC/Ncap) as is clear from FIG. 5. In detection position calculator 26 illustrated in FIG. 3, the difference value dtC and the change value Ncap are supplied to divider 63, and the ratio Rto is calculated by divider 63.

Furthermore, detection position calculator 26 calculates the count value of the position counter signal Pos at the external instruction timing, that is, the target instruction position detection value Dpex by position change amount calculator 65, multiplier 64, and adder 66.

First, position change amount calculator 65 calculates a change value of the position detection value for each read cycle Trc by, for example, differentiating the position detection value signal Dpos. FIG. 3 illustrates an example in which position change amount calculator 65 includes DFF 65f and subtractor 65s. That is, in position change amount calculator 65, the position detection value signal Dpos is supplied to a D input of DFF 65f and one input of subtractor 65s. AQ output of DFF 65f is supplied to another input of subtractor 65s. The read clock RCk is supplied to a clock terminal ck of DFF 65f. With this configuration, subtractor 65s subtracts, from the current position detection value, the position detection value immediately before the current position detection value, and as a result, outputs a position count change value signal Npoc indicating the change value of the position detection value for each read cycle Trc. FIG. 5 illustrates how change values Npoc0, Npoc1, Npoc2, and the like as the position count change value signals Npoc are output together with the position counter signal Pos for each read cycle Trc. Note that, specifically, in the case of the configuration of position change amount calculator 65 in FIG. 3, the change value NpocO immediately before the change value Npoc1 is used as a substitute for the change value Npoc1 in the period from the time point t0 to the time point t1.

The change value NpocO and the ratio Rto described above are supplied to multiplier 64. Here, the change value NpocO indicates the amount of change in the position detection value in the read cycle Trc, and the ratio Rto is a ratio of the time Ter to the read cycle Trc. Thus, the change value NpocO is multiplied by the ratio Rto, so that it is possible to obtain the amount of change in the position detection value during the period of the time Ter. That is, multiplier 64 outputs a position interpolation value dtR indicating this amount of change.

Adder 66 adds the position interpolation value dtR, which is the amount of change in the period of the time Ter, to the position detection value PosO at the time point t0. As a result, adder 66 can calculate the target instruction position detection value Dpex, as illustrated in FIG. 5.

As described above, motor control device 10 of the present exemplary embodiment includes instruction position detector 20 that calculates, as an instruction position detection value, a position detection value at an external instruction timing. Instruction position detector 20 includes internal counter 21, detection position calculator 26, and correction value generator 30. Internal counter 21 outputs a count value counted at a cyclic interval shorter than a position read cycle that is an interval at which a motor position detected by rotary encoder 71 mounted on motor 70 is read as a position detection value. Detection position calculator 26 controls a rotation of the motor by use of the position detection value, is supplied with an external detection instruction signal PEx including an instruction pulse, and calculates an instruction position detection value Dpex by use of a count value at the external instruction timing indicated by an edge of the instruction pulse. Correction value generator 30 includes external input terminal 27, input circuit 22, count value acquisition unit 24c, and correction value calculator 25. External input terminal 27 is supplied with the external detection instruction signal PEx. Input circuit 22 performs analog processing causing a pulse delay on the external detection instruction signal PEx to be input, and outputs a detection instruction signal PLt including an acquisition pulse as the delayed instruction pulse. Count value acquisition unit 24c acquires a count value Cap of an internal counter signal at a data acquisition timing indicated by an edge of the acquisition pulse, and holds the count value Cap of the internal counter signal as an acquisition count value CapX. Correction value calculator 25 calculates a correction value Crr for correcting an error between a count value Pst at the external instruction timing and the acquisition count value CapX, the error being caused by the pulse delay. Correction value generator 30 supplies, instead of the instruction pulse, a measurement pulse generated by use of the count value Cap output from internal counter 21 to input circuit 22 to measure a pulse delay of the measurement pulse in a state where motor 70 is rotating at a constant speed, and calculates the correction value Crr based on the pulse delay. Detection position calculator 26 corrects the count value CapX by use of the correction value Crr to generate a count value CapE at the external instruction timing. Instruction position detector 20 calculates the instruction position detection value Dpex by interpolation using a count value CapO acquired at the interval of the position read cycle and the corrected count value CapE.

As described above, according to motor control device 10, the acquisition count value CapX is corrected by use of the correction value Crr generated based on the measurement by correction value generator 30, it is possible to suppress the influence of the delay in input circuit 22, and to accurately obtain the desired instruction position detection value Dpex at the external instruction timing.

In addition, correction value generator 30 may further include pulse generator 23 that generates the measurement pulse by use of the count value Cap output from internal counter 21, a start value Pst indicating a start timing of the measurement pulse, and a stop value Pen indicating an end timing of the measurement pulse.

Correction value calculator 25 may calculate the correction value Crr by use of the acquisition count value CapX and the start value Pst, the acquisition count value CapX being acquired by count value acquisition unit 24c based on the measurement pulse.

Motor control device 10 may further include a non-volatile memory that stores the correction value Crr.

Note that, in the above description, for example, an example has been described in which the position read clock signal RCk or the detection instruction signal PLt is acquired or operated at the rising edge of the pulse, but the falling edge of the pulse may be used as appropriate. Furthermore, either the rising edge or the falling edge may be used depending on the signal. In addition, these pulses have been described as pulses whose pulse period is High, but these pulses may be pulses whose pulse period is Low and motor control device 10 can be configured according to such pulses. Furthermore, an example has been described in which internal counter 21 counts up, but the count may be down. In this case, motor control device 10 can be configured according to the down count as appropriate.

### INDUSTRIAL APPLICABILITY

A motor control device of the present invention is useful for a motor control device that requires accurate position detection, a semiconductor manufacturing device or an electronic component mounting machine that requires accurate positioning, and the like.

### REFERENCE MARKS IN THE DRAWINGS

10: motor control device
11: control unit
12: clock generator
13: timing signal generator
14: rotation control unit
15: motor drive unit
16: motor position receiver
20: instruction position detector
21: internal counter
22: input circuit
22s: changeover switch
23: pulse generator
24c: count value acquisition unit
24m: count value storage
24p: position data acquisition unit
25: correction value calculator
26: detection position calculator
27: external input terminal
30: correction value generator
31: photocoupler
32: amplifier
35, 36: comparator
37: logic circuit
41, 42, 45, 52, 65f: D-type flip-flop (DFF)
46: storage
51, 61s, 62, 65s: subtractor
61: delay correction unit
63: divider
64: multiplier
65: position change amount calculator
66: adder
70: motor
71: rotary encoder (encoder)
73: position counter
75: host controller

## Claims

1. A motor control device comprising
an instruction position detector including
an internal counter that outputs a count value counted at a cyclic interval shorter than a position read cycle that is an interval at which a motor position detected by a rotary encoder mounted on a motor is read as a position detection value,
a detection position calculator that controls a rotation of the motor by use of a count value acquired at the interval of the position read cycle and the position detection value, is supplied with an external detection instruction signal including an instruction pulse, and calculates an instruction position detection value by use of a count value at an external instruction timing indicated by an edge of the instruction pulse, and
a correction value generator including
an external input terminal that is supplied with the external detection instruction signal,
an input circuit that performs analog processing causing a pulse delay on the external detection instruction signal to be input, and outputs a detection instruction signal including an acquisition pulse as the delayed instruction pulse,
a count value acquisition unit that acquires a count value of an internal counter signal at a data acquisition timing indicated by an edge of the acquisition pulse, and holds the count value of the internal counter signal as an acquisition count value, and
a correction value calculator that calculates a correction value for correcting an error between the count value at the external instruction timing and the acquisition count value, the error being caused by the pulse delay,
the instruction position detector being configured to calculate, as the instruction position detection value, a position detection value at the external instruction timing,
wherein
the correction value generator supplies, instead of the instruction pulse, a measurement pulse generated by use of the count value output from the internal counter to the input circuit to measure a pulse delay of the measurement pulse in a state where the motor is rotating at a constant speed, and calculates the correction value based on the pulse delay, and
the detection position calculator corrects the acquisition count value by use of the correction value to generate the count value at the external instruction timing.

2. The motor control device according to claim 1, wherein
the correction value generator further includes a pulse generator that generates the measurement pulse by use of the count value output from the internal counter, a start value indicating a start timing of the measurement pulse, and a stop value indicating an end timing of the measurement pulse, and
the correction value calculator calculates the correction value by use of the acquisition count value and the start value, the acquisition count value being acquired by the count value acquisition unit based on the measurement pulse.

3. The motor control device according to claim 1 or 2, further comprising a non-volatile memory that stores the correction value.
